# FASCICULE DE BREVET EUROPEEN

(11) **EP 2 580 535 B1**
(45) Date de publication et mention de la délivrance du brevet: **25.04.2018**
(21) Numéro de dépôt: 11726390.5
(22) Date de dépôt: 10.06.2011
(51) Int. Cl.: F22B 1/00, F24S 10/00

(54) **RECEPTEUR SOLAIRE MODULAIRE ET CENTRALE SOLAIRE COMPORTANT AU MOINS UN TEL RECEPTEUR**
MODULARER SOLAREMPFÄNGER UND SOLARENERGIEANLAGE MIT MINDESTENS EINEM DERARTIGEN EMPFÄNGER
MODULAR SOLAR RECEIVER AND SOLAR POWER PLANT COMPRISING AT LEAST ONE SUCH RECEIVER

(30) Priorité: 11.06.2010 FR 1054658
(43) Date de publication de la demande: 17.04.2013
(73) Titulaire: Commissariat à l'Énergie Atomique et aux Énergies Alternatives, 75015 Paris (FR); Centre National de la Recherche Scientifique, 75016 Paris (FR)
(72) Inventeur: PRA, Franck, F-38450 Le Gua (FR); COUTURIER, Raphaël, F-38360 Sassenage (FR); FERRIERE, Alain, F-66800 Llo (FR); TOCHON, Patrice, F-38140 Uriage (FR)
(74) Mandataire: Ilgart, Jean-Christophe
(86) Numéro de dépôt international: PCT/EP2011/059725
(87) Numéro de publication internationale: WO 2011/154537

(56) Documents cités:
- WO-A1-01/61254
- WO-A1-2004/023048
- DE-A1- 19 744 541
- JP-A- 2005 195 196
- US-A1- 2004 035 111

## Description

### DOMAINE TECHNIQUE ET ART ANTÉRIEUR

La présente invention se rapporte à un récepteur solaire et à une centrale solaire à concentration comportant au moins un tel récepteur, plus particulièrement une centrale solaire à tour.

La technologie solaire thermique à concentration consiste à utiliser le rayonnement solaire pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants.

Il existe typiquement quatre familles de systèmes solaires à concentration (Concentrating Solar Power (CSP) en anglais) les collecteurs cylindro-paraboliques à foyer linéaire, les concentrateurs linéaires de Fresnel, les systèmes à tour à récepteur central et les paraboles à foyer mobile.

Une centrale solaire à tour comporte notamment un récepteur solaire recevant le rayonnement solaire transmis par des miroirs appelés héliostats. Le récepteur solaire est le siège de la conversion du rayonnement solaire en chaleur sensible. Il forme un échangeur thermique dans lequel l'apport de chaleur est effectué exclusivement sous forme de rayonnement absorbé par une paroi puis diffusé par conduction dans la structure interne de l'échangeur. Le fluide de transfert, ou caloporteur, circule dans la structure interne et s'échauffe par échange convectif.

Un récepteur comporte notamment un absorbeur dans lequel circule le fluide à réchauffer. De manière fréquente, une structure d'absorbeur comporte une pluralité de tubes juxtaposés dans lesquels circule le fluide de transfert, une portion de la surface de ces tubes recevant le rayonnement solaire. Cette technique est particulièrement adaptée dans le cas où le fluide de transfert est un liquide, tel que l'eau liquide, l'huile ou les sels fondus. En revanche, dans le cas de gaz, tels que la vapeur d'eau ou l'air, le coefficient d'échange en paroi chute, l'éclairement d'une face des tubes par le flux solaire élevé entraîne une différence de température importante entre la face éclairée et la face arrière, d'où des déformations pouvant conduire à la rupture de tubes.

De plus, le récepteur solaire est soumis à des conditions de fonctionnement très sévères. En effet, il est soumis à une température de service élevée, à des gradients thermiques à travers la structure interne liés au transfert conductif d'un flux de chaleur élevé, et à des variations rapides de température de fortes amplitudes, notamment lors des passages nuageux.

Par conséquent, il subit des dilatations. Or celles-ci peuvent devenir très contraignantes dans le cas de récepteur formé d'une seule plaque de grandes dimensions.

En outre, dans le cas d'un récepteur de grande dimension, celui-ci ne connaît pas une illumination homogène sur toute sa surface, il existe en effet des zones à fort flux connaissant un fort échauffement, et des zones à faible flux connaissant un échauffement réduit. Par conséquent, le fluide circulant dans le récepteur ne subit pas un échauffement homogène. Il y a donc apparition de dilatations différentielles qui peuvent être dommageables à la structure du récepteur. Par ailleurs, l'utilisation du récepteur n'est pas optimale. Le document JP 2005 195 196 décrit un récepteur solaire suivant le préambule de la revendication 1. C'est par conséquent un but de la présente invention d'offrir un récepteur solaire relativement robuste à la dilatation. C'est également un but supplémentaire d'offrir un récepteur solaire dans lequel l'échauffement du fluide est optimisé.

### EXPOSÉ DE L'INVENTION

Le but énoncé ci-dessus est atteint par un récepteur solaire composé d'une pluralité de modules absorbeurs comportant chacun leur propre circuit fluidique. Les modules forment alors un pavage permettant une libre dilatation de chacun des modules. Puisque les modules absorbeurs présentent une surface réduite par rapport à un absorbeur de l'état de la technique, la surface de chaque module est soumise à un flux plus homogène. Les circuits des modules sont interconnectés entre eux.

De manière particulièrement avantageuse, il est possible d'adapter l'alimentation en fluide des modules en fonction du flux qu'ils reçoivent. Dans le cas d'un module situé dans une zone à fort flux, on pourra l'alimenter en fluide froid, et dans le cas d'un module situé dans une zone à faible flux, on pourra alimenter le module avec le fluide préchauffé dans le module situé dans la zone à fort flux. La température de tout le récepteur est alors plus homogène, et les sollicitations thermomécaniques sont réduites.

Plus généralement, grâce à la réalisation modulaire, tout type de circuit fluidique peut être envisagé suivant les besoins et/ou les conditions de fonctionnement.

Par ailleurs, cette conception modulaire permet une réparation facilitée, puisqu'il suffit de remplacer le module défaillant et non tout le récepteur. Le changement d'un module est rapide et un arrêt complet de la centrale solaire peut être écourté. En outre, il est envisageable d'avoir quelques modules en stock pour effectuer les réparations, alors qu'il est inconcevable de disposer d'un récepteur complet d'avance.

De manière avantageuse, les connexions fluidiques se font en face arrière des modules, i.e. dans une zone "froide" du module. Outre, le fait que les sollicitations thermomécaniques sont réduites, cette connexion permet d'optimiser la surface utile des modules, en évitant une perte de surface par la présence des connexions dans des zones exposées au flux.

Par exemple, la pluralité d'éléments absorbeurs unitaires du récepteur solaire selon la présente invention est répartie en plusieurs groupes, les éléments absorbeurs d'un groupe sont alors alimentés par un distributeur de fluide et forme un étage, et les autres groupes formant chacun un étage sont alimentés en série. On peut alors adapter la surface de chaque étage à la distribution de flux solaire fournie par le champ de miroirs. Avantageusement, le récepteur solaire selon l'invention peut être composé de plusieurs étages de modules absorbeurs connectés en série, chaque étage étant constitué de modules connectés en parallèle.

La présente invention a alors pour objet un récepteur solaire pour centrale thermique comportant une pluralité de modules absorbeurs, chaque module absorbeur comportant au moins une face destinée à être éclairée par un flux solaire, dans lequel les modules sont disposés côte à côte formant un pavage, un jeu suffisant étant prévu entre les modules absorbeurs adjacents de sorte à éviter un contact entre les modules absorbeurs en cas de dilatation, chaque module absorbeur comportant en outre son propre circuit fluidique dans lequel est destiné à circuler un fluide destiné à être échauffé par le flux solaire, les circuits fluidiques des modules absorbeurs étant connectés entre eux. Très préférentiellement, le réseau fluidique de chaque module absorbeur comporte des tubes sensiblement parallèle à la face, comprenant chacun une entrée d'alimentation et une sortie d'évacuation du fluide, lesdites entrées et sorties débouchant dans une face du module absorbeur opposée à la face destinée à être éclairée, et les circuits fluidiques des modules absorbeurs sont connectés entre eux de telle sorte que le fluide circule au moins entre un premier absorbeur et un deuxième absorbeur.

De manière avantageuse, les modules absorbeurs sont orientés les uns par rapport aux autres de sorte que le gradient de flux solaire sur chaque module absorbeur soit limité. Par exemple, les modules absorbeurs sont orientés de sorte à délimiter des zones concentriques en partant d'une zone centrale du récepteur.

Le récepteur selon l'invention peut comporter des connecteurs d'alimentation et des connecteurs d'évacuation connectés aux entrées et sorties des modules absorbeurs, au moins les connecteurs d'alimentation étant des lyres de dilatation.

Les tubes sont avantageusement noyés dans une matrice à coefficient de conductivité thermique élevé.

De préférence, les modules absorbeurs sont connectés en série au moins par groupe de deux, les groupes étant connectés en parallèle.

Les modules absorbeurs peuvent être répartis au moins en un premier et en un deuxième groupe, le premier groupe formant une zone centrale du récepteur et le deuxième groupe entourant le premier groupe et formant une zone périphérique du récepteur, les modules absorbeurs de chaque groupe étant connectés en parallèle, et les deux groupes étant connectés en série.

La présente invention a également pour objet une centrale thermique comportant au moins un récepteur selon la présente invention, une alimentation en fluide et des moyens de collecte du fluide échauffé.

Dans un exemple de réalisation, le premier groupe est connecté en entrée à une alimentation en fluide froid et le deuxième groupe est connecté en sortie à un système utilisant le fluide échauffé par le récepteur.

Dans un autre exemple de réalisation, le deuxième groupe est connecté en entrée à une alimentation en fluide froid et le premier groupe est connecté en sortie à un système utilisant le fluide échauffé par le récepteur. Les modules du second groupe peuvent alors présenter des propriétés de tenue à la température inférieures à celles du premier groupe.

La centrale thermique selon l'invention peut comporter une tour sur laquelle est monté le récepteur et au moins un héliostat orienté vers le récepteur.

Le fluide peut être un gaz, par exemple de l'air et le système utilisant le gaz échauffé est une turbine à gaz.

### BRÈVE DESCRIPTION DES DESSINS

La présente invention sera mieux comprise à l'aide de la description qui va suivre et des dessins en annexe sur lesquels :
- la figure 1 est une représentation schématique de la carte de flux solaire sur un exemple de réalisation d'un récepteur modulaire selon la présente invention,
- la figure 2 est une représentation schématique d'un autre exemple de réalisation d'un récepteur modulaire selon la présente invention,
- les figures 3A et 3B sont des vues en perspective schématiques de la face avant et de la face arrière respectivement d'un exemple de réalisation du récepteur modulaire de la figure 2,
- la figure 4 est une représentation schématique d'un autre exemple de réalisation d'un récepteur modulaire selon la présente invention,
- la figure 5 est une représentation schématique d'un module absorbeur seul particulièrement adapté à la réalisation d'un récepteur modulaire selon l'invention,
- la figure 6 est une vue en perspective d'une réalisation pratique d'un module adapté à la réalisation d'un récepteur modulaire selon l'invention,
- la figure 7 est une représentation graphique de l'évolution de la température en °C du fluide et de la paroi du module destinée à être éclairée dans le cas où le fluide froid alimente les modules situés dans une zone à fort flux, et les modules situés dans une zone à faible flux sont alimentés par le fluide sortant des modules situés dans la zone à fort flux,
- la figure 8 est une représentation schématique d'une centrale solaire selon la présente invention,
- les figures 9, 10 et 11 sont des représentations schématiques de différents modes de connexion entre modules d'un récepteur selon la présente invention.

### EXPOSÉ DÉTAILLÉ DE MODES DE RÉALISATION PARTICULIERS

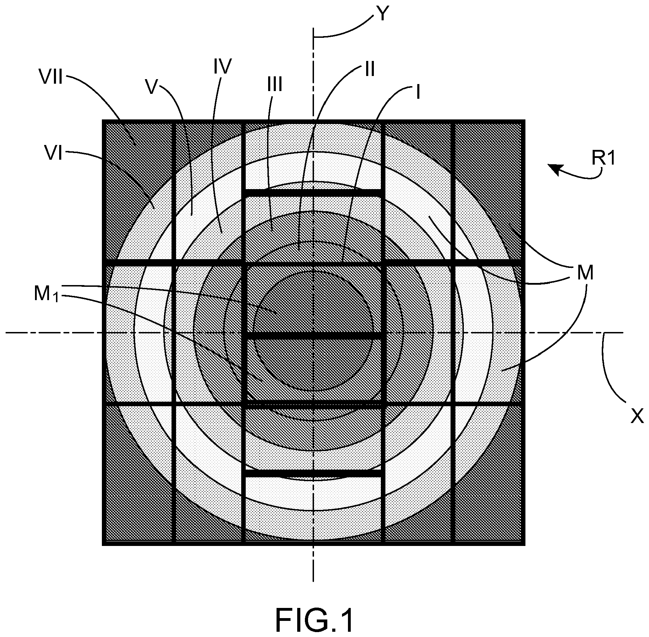

Sur la figure 1, on peut voir un exemple de réalisation d'un récepteur modulaire R1 selon la présente invention comportant une pluralité de modules M disposés côte à côte de sorte à former un pavage sensiblement continu. Un jeu j est prévu entre les bords de deux modules adjacents afin de permettre une libre dilatation de chacun des modules sans risques de contact et de détérioration.

Le jeu j dépend des matériaux constitutifs des modules, plus particulièrement de leurs coefficients de dilatation. Le jeu j n'est pas nécessairement identique entre tous les modules, ce peut par exemple être le cas si tous les modules ne sont pas réalisés dans le même matériau.

Le jeu peut-être compris par exemple entre 1 et 15 mm, par exemple de l'ordre de 7 mm.

Par exemple, dans le cas où les modules sont réalisés en acier inox ou un alliage base nickel, un jeu de l'ordre de 7 mm peut être prévu correspondant à la dilatation. Le jeu entre les modules est calculable par l'homme du métier avec ses connaissances générales.

Dans l'exemple représenté, le pavage est de forme carrée.

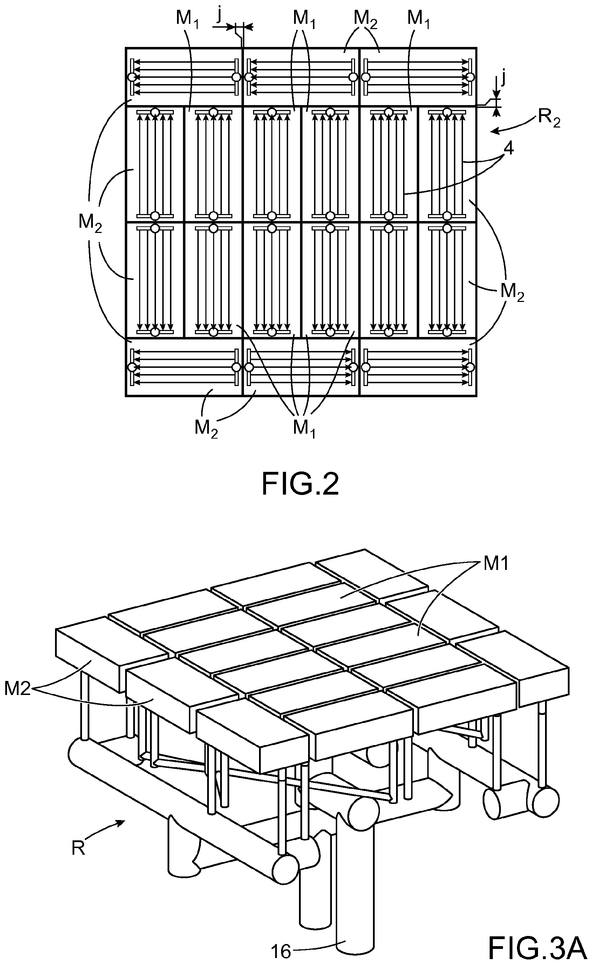

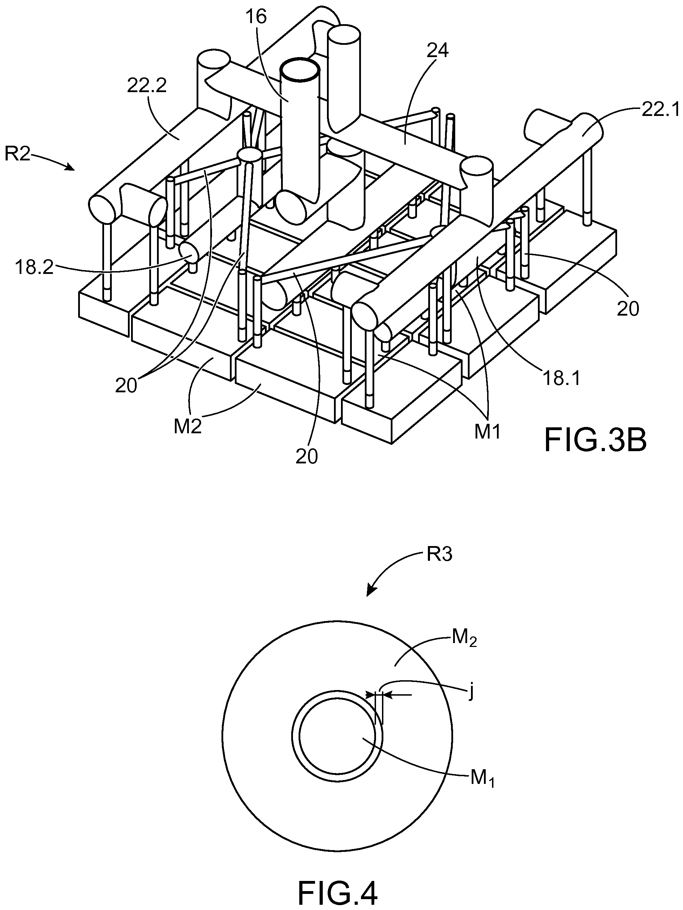

En outre, selon la présente invention, chaque module comporte son propre circuit fluidique visible sur la figure 3B et schématisé par les flèches 4 sur la figure 2 de l'autre exemple de réalisation, permettant une grande liberté dans la réalisation d'un circuit fluidique.

Dans l'exemple représenté, le récepteur R1 comporte 18 modules M.

Les modules M, dans l'exemple représenté, sont de formes rectangulaires, et présentent au moins une face plane 6 destinée à être éclairée par le flux solaire.

Sur la figure 1, est superposée de manière schématique au récepteur R1 la carte du flux solaire concentré caractéristique d'une centrale à tour. Cette carte comporte des zones sensiblement concentriques, la zone la plus foncée est celle recevant le flux solaire maximal, et la zone la plus claire est celle recevant le flux solaire minimal.

La zone recevant le flux maximal est située au centre de la carte et est désignée I, et la zone recevant le flux minimal est la zone située la plus à l'extérieur et est désignée VII, les zones intermédiaires sont désignées II à VI.

Les héliostats de la centrale solaire sont orientés de sorte que la zone I recouvre une zone centrale du récepteur.

Les modules M sont alors de préférence orientés de sorte qu'ils rencontrent le moins grand nombre de zones I à VII afin qu'ils soient soumis à un flux variant peu. Par exemple, les modules centraux M1 sont situés principalement dans la zone I et de manière moindre dans la zone II. De préférence, l'orientation des modules est telle qu'au moins la majorité des modules ne soient pas illuminés par les six zones I à VII.

Ainsi, grâce à la réalisation modulaire selon l'invention, les modules reçoivent des flux d'intensité proches, et non à la fois le flux maximal et le flux minimal.

En variante les deux modules centraux M1 pourraient être orientés de sorte que leur longueur s'étendent parallèlement à l'axe Y et offrir un fonctionnement identique à la disposition de la figure 1.

Dans la suite de la description nous distinguerons les zones en deux catégories, les zones à fort flux et les zones à faible flux.

Il est bien entendu que plus le nombre de modules est important, et de fait plus leur surface est réduite, plus l'inhomogénéité du flux à la surface de chaque module est réduite. On augmente alors la précision des limites entre les régions définies par les modules et on peut ainsi se rapprocher de la forme des zones de flux différents.

On peut également prévoir d'avoir des modules de formes différentes dans un même récepteur afin d'améliorer encore la précision.

Cependant pour des raisons économiques et de réalisations pratiques, puisque chaque module a sa propre connexion fluidique, on choisit en général de limiter le nombre de modules et donc d'avoir une certaine inhomogénéité du flux sur certains ou tous les modules. En outre, il est généralement plus économique de disposer d'un module standard au lieu de plusieurs modules, et ce même si le fonctionnement du récepteur n'est pas optimal.

Par exemple, les modules sont positionnés sur un cadre support muni de montants transverses de manière à porter la charge de chacun des modules. Les modules seront préférentiellement non solidaires du support pour limiter les problèmes de différence de dilatation thermique entre le matériau des modules et celui du cadre support. Par exemple, les modules sont posés sur le support, et les tubulures d'alimentation en fluide et d'évacuation du fluide assurent la flexibilité du système.

De préférence, les tubulures sont calorifugées pour réduire les pertes thermiques au niveau des connexions entre les modules. Le calorifugeage est de type connu de Lhomme du métier.

Par exemple, chaque module comporte une nappe de tubes parallèles à sa face éclairée et parallèles entre eux.

On peut alors prévoir d'alimenter de manière spécifique chaque module en fonction du flux solaire qui l'éclaire.

Le fluide circulant dans les modules et entre les modules est un fluide sous pression, par exemple au moins supérieure à 5 Bar, cette circulation sous pression permettant de maîtriser la distribution fluidique tout au long de son parcours contenu dans les tubes interconnectés.

Par exemple, on peut prévoir d'alimenter en fluide froid les modules situés dans les zones à fort flux et d'alimenter les modules situés dans les zones à faible flux avec le fluide sortant des zones à fort flux.

Ainsi par exemple, les modules situés dans les zones à fort flux sont connectés en parallèle à une source de fluide froid, et sont connectés en série avec les modules situés dans les zones à faible flux.

Sur les figures 2, 3A et 3B, on peut voir un autre exemple de réalisation d'un récepteur modulaire R2 selon la présente invention.

Sur la figure 3A, on peut voir le récepteur du côté de sa face destinée à recevoir le flux solaire, et sur la figure 3B, on peut voir le récepteur du côté des connexions fluidiques entre les modules du récepteur en face arrière du récepteur.

Comme on le constate sur la figure 1 représentant la carte des flux qui s'applique aussi au récepteur R2, la zone à fort flux se situe au centre et la zone à faible flux se situe à l'extérieur. Le récepteur R2 présente une distribution simplifiée par rapport à celle du récepteur de la figure 1.

Le récepteur R2 comporte au total 18 modules, huit modules M1 sont situés au centre dans la zone à fort flux et dix modules M2 sont situés à l'extérieur entourant les modules M1 dans la zone à faible flux. On peut alors prévoir que les huit modules M1 soient connectés en parallèle et connectés en série avec les dix modules M2. Dans l'exemple représenté, l'alimentation des modules M1 se fait au centre du récepteur.

La répartition des modules du récepteur R2 permet de reproduire la distribution du flux solaire sur le récepteur. Cette répartition permet d'améliorer de manière sensible le fonctionnement du récepteur par rapport à celui des récepteurs de l'état de la technique.

Sur la figure 3B, on peut voir un exemple de circuit fluidique de connexion entre les modules du récepteur R2.

Le circuit fluidique comporte un conduit d'alimentation 16 des modules M1, ceux-ci étant alimentés en parallèle, deux conduits de collecte 18.1, et 18.2 du fluide échauffé sortant des modules M1. Chaque conduit de collecte 18.1, 18.2 collecte le fluide échauffé de quatre modules M1, et le redistribue dans quatre modules M2 en parallèle par des sous-conduits 20.

Le fluide en sortie des modules M2 est collecté pas deux conduits 22.1, 22.2, connectés en eux par un conduit principal 24 regroupant tout le fluide échauffé sortant du récepteur. Ce conduit principal 24 est connecté par exemple à une zone de stockage du fluide échauffé en vue de son utilisation.

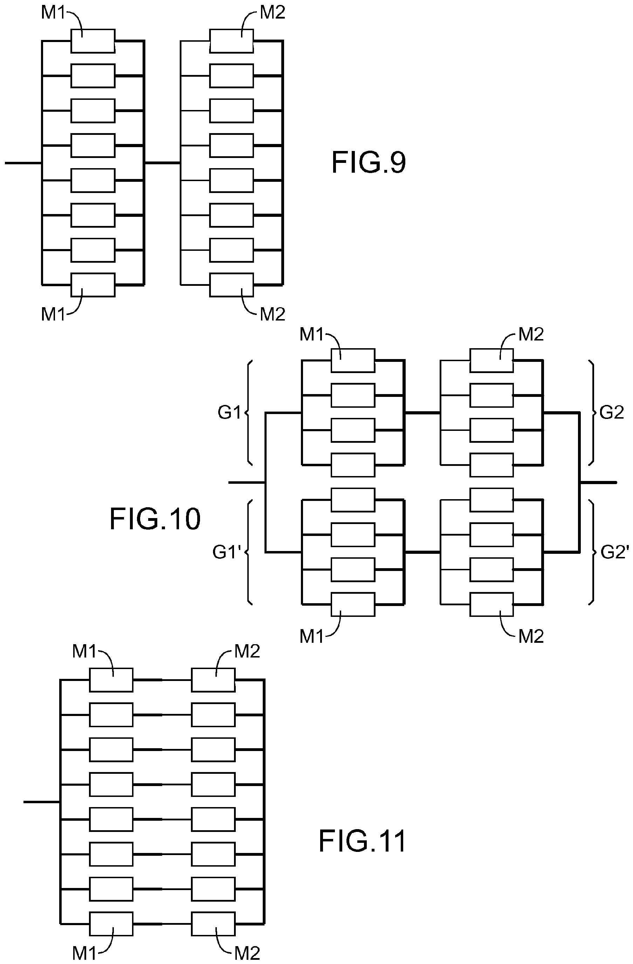

Sur les figures 9, 10 et 11, on peut voir des exemples de connexion entre les modules M1 situés dans une zone à fort flux et les modules M2 situés dans la zone à faible flux.

Sur la figure 9, les modules M1 sont tous alimentés en parallèle. En sortie des modules M1, le fluide échauffé dans chaque module M1 est collecté en parallèle et est mélangé afin d'homogénéiser la température du fluide avant d'alimenter de nouveau en parallèle chacun des modules M2. La collecte du fluide échauffé dans les modules M2 s'effectue également en parallèle. Ce mode de connexion présente l'avantage d'assurer une homogénéisation de la température du fluide entre chaque zone de flux.

Sur la figure 10, on peut voir un autre exemple de connexion des modules M1 et M2.

Dans cet exemple, des sous-groupes de modules sont créés, en particulier chaque zone de flux comporte huit modules, deux sous-groupes G1, G1' de quatre modules M1 sont réalisés dans la zone à fort flux, et deux sous-groupes G2, G2' de quatre modules M2 sont réalisés dans la zone à faible flux.

Les deux sous-groupes G1, G1' sont alimentés en parallèle, les modules dans chaque sous-groupe sont alimentés en parallèle.

Chaque sous groupe G1, G1' est connecté en série à un sous-groupe G2, G2', et les modules M2 de chacun des sous-groupes G2, G2' sont alimentés en parallèles.

Le fluide en sortie des sous groupes G2, G2' est collectée en parallèle, puis les fluides collectés dans chacun des sous groupes sont mélangés.

Sur la figure 11, on peut voir un autre exemple de connexion, dans lequel les modules M1 sont alimentés en parallèle et chaque module M1 est connecté en série avec un module M2, le fluide en sortie des modules M2 est collecté en parallèle.

Il est bien entendu que le récepteur peut comporte plus de deux zones de flux, et par conséquent, les connexions décrites sur les figures 9 à 11 sont adaptées par exemple à une répartition des modules en trois, voire plus, zones de flux solaire.

De préférence, l'architecture du circuit fluidique de connexion est telle qu'elle génère un débit du fluide identique ou quasi-identique entre les modules. La conception du circuit tient alors compte des pertes de charge générées par les modules et par le diamètre des conduits choisis.

Comme expliqué ci-dessus, les modules sont disposés côte à côte de sorte à former un pavage sensiblement continu. Un jeu j est prévu entre les bords de deux modules adjacents afin de permettre une libre dilatation de chacun des modules, réduisant ainsi les risques de contact entre les modules et leur détérioration.

Sur la figure 4, on peut voir un autre exemple de réalisation dans lequel le récepteur R3 a une forme circulaire et comporte deux modules concentriques, un premier module central circulaire M1 soumis au fort flux et un module extérieur annulaire soumis au faible flux M2. Un jeu j est prévu entre le bord du premier module et le bord intérieur du deuxième module.

Il est bien entendu qu'un récepteur modulaire présentant toute autre forme et comportant des modules ayant toute forme, par exemple rectangulaire, en losange, en forme d'ellipse ou de forme quelconque ne sort pas du cadre de la présente invention.

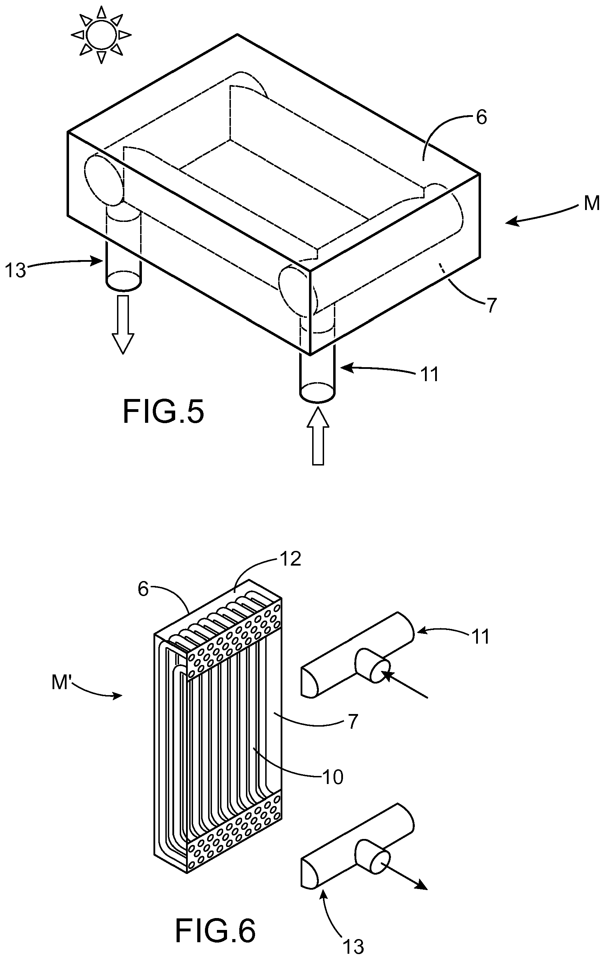

Sur la figure 5 on peut voir, représenté de manière schématique, un exemple de module particulièrement adapté à la réalisation d'un récepteur modulaire selon l'invention.

Le module M comporte une face 6 destinée à être éclairée par le flux solaire symbolisé par un soleil, et une face 7 opposée dite face arrière qui n'est pas éclairée.

Le module M comporte au moins un tube 10, avantageusement plusieurs, formant le circuit fluidique s'étendant sensiblement parallèlement à la face 6 et des collecteurs d'alimentation 11 et d'évacuation 13 du fluide en entrée et en sortie des tubes 10 respectivement. La circulation du fluide est symbolisée par les flèches.

De manière particulièrement avantageuse, les tubes 10 débouchent dans la face arrière 7 du module et les collecteurs 11, 13 sont également disposés en face arrière.

Les collecteurs 11, 13 ne sont alors pas soumis au flux solaire, les sollicitations thermiques sont donc réduites, ce qui limite de fait les risques d'endommagement de ceux-ci. Ceux-ci peuvent alors être réalisés avec des matériaux ayant une tenue à la température moindre et généralement un prix de revient plus faible. Par ailleurs, dans le cas où les collecteurs seraient connectés par brasage aux tubes, les risques de fuite sont réduits.

En outre, le fait de disposer les sorties des tubes et les collecteurs en face arrière permet d'augmenter la surface utile du récepteur. En effet, comme on peut le voir sur les figures 1 et 3, la quasi-totalité de la surface du récepteur orientée face au flux solaire sert à transmettre l'énergie du flux solaire au fluide. En effet, toute la surface du récepteur est composée des faces 6 des modules, hormis les espaces entre les modules qui forment des zones perdues, cependant leur largeur peut être optimisée de sorte à réduire leurs surfaces.

De manière également avantageuse, on prévoit que la connexion entre les tubes 10 et le circuit fluidique extérieur soit apte à absorber les dilatations différentielles entre les modules. On peut pour cela mettre en oeuvre des soufflets de dilatation.

De manière encore plus avantageuse, on réalise les tubes d'alimentation ayant directement une forme permettant de s'affranchir des soufflets de dilatation, par exemple ceux-ci forment des lyres de dilatation. Les tubes de collecte peuvent également former des lyres de dilatation, cependant le problème de dilatation est moindre puisqu'ils sont traversés par un fluide échauffée et connaissent eux-mêmes une dilatation.

Sur la figure 6, on peut voir un autre exemple de module M' particulièrement adapté à la réalisation d'un récepteur modulaire selon la présente invention. Dans cet exemple, le module comporte une pluralité de tubes 10 répartis en couches noyés dans une matrice 12 présentant une très bonne conduction thermique supérieure à 100W/m/K, les couches étant superposées selon une direction normale à la face éclairée 6.

La matrice comprend au moins un métal ou un alliage à base de métal, de préférence un métal ou un alliage de métaux à base de cuivre et/ou d'aluminium.

En variante, le noyau peut être réalisé en magnésium, en argent, en or, en zinc, en tungstène.

Les alliages peuvent être le laiton, le bronze, les alliages Al/Si et Al/Cu, le Monel (70Ni-30Cu), les composites à base de cuivre avec dispersoïdes d'alumine (Glidcop).

Comme dans l'exemple de module de la figure 5, les tubes 10 débouchent en face arrière 7 du module. Cet exemple présente l'avantage de réduire le gradient thermique au sein du module et de réduire les effets du passage d'un nuage qui provoque la disparition momentanée du flux solaire. La matrice 12, qui stocke de la chaleur lorsque le flux solaire éclaire le module, libère cette chaleur lorsque le flux disparaît, assurant une baisse progressive de la température du fluide sortant du module et des composants du module lui-même. D'une part les contraintes thermomécaniques au sein du module sont réduites et d'autre part les variations de température du fluide et des composants en aval sont lissées. La matrice est reçue dans une enveloppe présentant à tenir à haute température.

Grâce à la modularité géométrique du récepteur, il est possible d'adapter le module en fonction de flux solaire dans laquelle il est situé. Les modules situés dans la zone à fort flux sont réalisés en un ou des matériaux résistants aux hautes températures, alors que ceux situés dans la zone à faible flux peuvent être réalisés en matériaux résistant à des températures plus basses. Le coût de fabrication lié aux matériaux des modules peut alors être généralement réduit.

Grâce à la modularité du récepteur, il est possible de réaliser des circuits fluidiques différents et ainsi d'optimiser la réalisation des modules en fonction des besoins et des conditions de fonctionnement souhaitées ou imposées.

Dans la suite de la description, nous allons considérer un récepteur formé par des modules tels que celui représenté sur la figure 6. La paroi considérée est celle portant la face 6 éclairée par le flux.

Si le fluide d'entrée alimente le module situé dans la zone à faible flux, la température de la paroi est modérée. Typiquement avec une température d'entrée de fluide de 300°C, la température de la paroi est de l'ordre de 550°C. On peut alors utiliser un acier inoxydable pour la réalisation du module. En revanche, le module situé dans la zone à fort flux est alimenté par un fluide déjà préchauffé par le module situé dans la zone à faible flux et, du fait de l'exposition au fort flux, la température de la paroi atteint alors environ 1000°C.

On peut alors choisir des matériaux différents d'un module à l'autre, en fonction de la zone de flux dans laquelle il est situé. En considérant que le matériau moins résistant thermiquement a généralement un prix de revient plus faible qu'un matériau plus résistant à la température, on peut optimiser le coût de fabrication du récepteur.

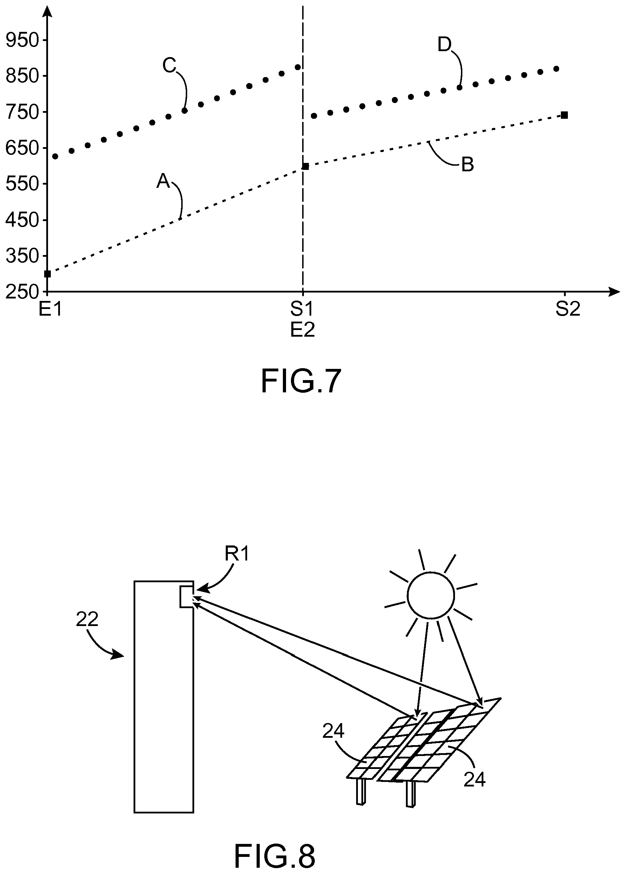

Sur la figure 7, on peut voir l'évolution de la température T en °C du fluide ou de la paroi du module portant la face 6 dans le cas où le fluide froid alimente les modules situés dans la zone à fort flux, et les modules situés dans la zone à faible flux sont alimentés par le fluide sortant des modules situés dans la zone à fort flux.

E1 désigne l'entrée des modules dans la zone à fort flux; S1 désigne la sortie des modules dans la zone à fort flux; E2 désigne l'entrée des modules dans la zone à faible flux; et S2 désigne la sortie des modules dans la zone à faible flux.

La température de la paroi du module situé dans la zone à fort flux est représentée par la courbe C.

La température de la paroi du module situé dans la zone à faible flux est représentée par la courbe D.

La température du fluide circulant dans le module situé dans la zone à fort flux est représentée par la courbe A.

La température du fluide circulant dans le module situé dans la zone à faible flux est représentée par la courbe B.

On constate dans cet exemple d'alimentation fluidique, que les températures des parois des modules sont quasiment identiques. On peut alors utiliser des modules ayant les mêmes propriétés de tenue à la température. Dans ce cas particulier, la température maximale des modules est 900°C, on peut alors utiliser des matériaux à base de nickel.

Il est bien entendu que le récepteur selon la présente invention peut présenter tout type de connexion fluidique, par exemple mais de manière non limitative :
- tous les modules peuvent être alimentés en parallèle par une source de fluide froid, quel que soit le flux que chaque module reçoit,
- comme décrit précédemment, on peut prévoir d'alimenter en parallèle les modules situés dans la zone à fort flux avec le fluide froid, les modules situés dans la zone à faible flux étant alimentés par le fluide sortant des modules situés dans la zone à fort flux ; ou
- comme également décrit précédemment, d'alimenter en parallèle les modules situés dans la zone à faible flux avec le fluide froid, les modules situés dans la zone à fort flux étant alimentés par le fluide sortant des modules situés dans la zone à faible flux.

De manière alternative, il peut être avantageux de connecter en série deux ou plusieurs modules, et de connecter en parallèle les groupes de modules connectés en série. Par exemple, dans le cas où le récepteur comporte 16 modules, on connecte avantageusement des paires de modules en série afin de n'avoir plus que 8 connexions en parallèle, ce qui permet de réduire les disparités de débit entre les modules et donc de diminuer les risques d'apparition de points chauds. En outre, la distribution du fluide est améliorée car les pertes de charges sont augmentées par rapport à 16 connexions en parallèle. Si la mise en série de modules permet de réduire les risques d'une mauvaise distribution de fluide par rapport à une disposition intégralement en parallèle, il est souhaitable d'assurer un re-mélange du fluide en sortie des modules M1 de manière à ce que les fluides alimentant les modules M2 aient des niveaux de température identiques, comme cela est schématisé sur la figure 9.

Grâce à la présente invention, on peut obtenir un fluide sortant des modules dont les températures sont proches. Ce qui n'est pas le cas avec les récepteurs de l'état de la technique qui sont formés de tubes disposés les uns à côté des autres s'étendant d'un bord à un bord opposé du récepteur. En effet, chaque tube ne reçoit pas le même flux et celui-ci varie sur la longueur de chaque tube, les températures du fluide sortant de chaque tube peuvent varier de manière considérable, ce qui peut être dommageable pour les éléments en aval du récepteur. Le ré-mélange en sortie des modules M1 est donc particulièrement intéressant pour éviter les dommages sur les éléments en aval.

En outre, le récepteur modulaire selon la présente invention présente l'avantage d'être de maintenance simplifiée. En effet, si un module est défaillant, par exemple en cas de fuite, celui-ci peut être remplacé unitairement, sans requérir un remplacement du récepteur complet. De plus, ce remplacement réduit considérablement le temps d'arrêt de la centrale solaire. Outre le coût réduit de la réparation, la durée d'intervention est réduite de manière sensible, d'autant plus qu'il est possible d'avoir quelques modules en stock contrairement à un récepteur complet.

Le récepteur selon la présente invention offre également l'avantage d'être facilement adapté pour modifier sa puissance. Notamment dans le cas de la réalisation de récepteurs de plus grandes puissances, il suffit d'augmenter le nombre d'étages et le nombre de modules par étage.

Sur la figure 8, on peut voir une représentation schématique d'une centrale solaire à tour selon la présente invention comportant un récepteur R1 selon la présente invention monté au sommet d'une tour 22 entourée d'héliostats 24 orientés vers le récepteur et renvoyant un flux solaire F concentré sur le récepteur modulaire R1.

Le récepteur est par exemple relié à une turbine à gaz et l'alimente en gaz chaud.

## Revendications

1. Récepteur solaire (R1, R2, R3) pour centrale thermique comportant une pluralité de modules absorbeurs (M, M', M1, M2), chaque module absorbeur (M, M', M1, M2) comportant au moins une face (6) destinée à être éclairée par un flux solaire, dans lequel les modules (M, M', M1, M2) sont disposés côte à côte formant un pavage, chaque module absorbeur (M, M', M1, M2) comportant en outre son propre circuit fluidique (4) dans lequel est destiné à circuler un fluide destiné à être échauffé par le flux solaire, les circuits fluidiques des modules absorbeurs (M, M', M1, M2) étant connectés entre eux, dans lequel le réseau fluidique de chaque module absorbeur comporte des tubes sensiblement parallèle à la face (6), comprenant chacun une entrée d'alimentation et une sortie d'évacuation du fluide, et dans lequel les circuits fluidiques des modules absorbeurs sont connectés entre eux de telle sorte que le fluide circule au moins entre un premier module absorbeur et un deuxième module absorbeur, **caractérisé en ce qu'**un jeu (j) suffisant est prévu entre les modules absorbeurs (M, M', M1, M2) adjacents de sorte à éviter un contact entre les modules absorbeurs (M, M', M1, M2) en cas de dilatation, et **en ce que** lesdites entrée et sortie débouchent dans une face (7) du module absorbeur opposée à la face (6) destinée à être éclairée de telle sorte qu'elles ne soient pas soumises aux rayons solaires

2. Récepteur solaire selon la revendication 1, dans lequel les modules absorbeurs (M, M', M1, M2) sont orientés de sorte à délimiter des zones concentriques en partant d'une zone centrale du récepteur.

3. Récepteur solaire selon la revendication 1 ou 2, dans lequel les tubes (10) sont noyés dans une matrice (12) à coefficient de conductivité thermique supérieure à 100 W/m/K.

4. Récepteur solaire selon l'une des revendications 1 à 3, comportant des connecteurs d'alimentation (11) et des connecteurs d'évacuation (13) connectés aux entrées et sorties des modules absorbeurs (M, M', M1, M2), au moins les connecteurs d'alimentation (11) étant des lyres de dilatation.

5. Récepteur solaire selon l'une des revendications 1 à 4, dans lequel les modules absorbeurs (M, M', M1, M2) sont connectés en série au moins par groupe de deux, les groupes étant connectés en parallèle.

6. Récepteur solaire selon l'une des revendications 1 à 4, dans lequel les modules absorbeurs (M1, M2) sont répartis au moins en un premier et en un deuxième groupe, le premier groupe formant une zone centrale du récepteur et le deuxième groupe entourant le premier groupe et formant une zone périphérique du récepteur, les modules absorbeurs de chaque groupe étant connectés en parallèle, et les deux groupes étant connectés en série.

7. Centrale thermique comportant au moins un récepteur (R1, R2, R3) selon l'une des revendications 1 à 6, une alimentation en fluide et des moyens de collecte du fluide échauffé.

8. Centrale thermique selon la revendication 7 en combinaison avec la revendication 6, dans lequel le premier groupe est connecté en entrée à une alimentation en fluide froid et le deuxième groupe est connecté en sortie à un système utilisant le fluide échauffé par le récepteur (R1, R2, R3).

9. Centrale thermique selon la revendication 7 en combinaison avec la revendication 6, dans lequel le deuxième groupe est connecté en entrée à une alimentation en fluide froid et le premier groupe est connecté en sortie à un système utilisant le fluide échauffé par le récepteur (R1, R2, R3).

10. Centrale thermique selon l'une des revendications 7 à 9, comportant une tour (22) sur laquelle est monté le récepteur (R1, R2, R3) et au moins un héliostat (24) orienté vers le récepteur (R1, R2, R3).

11. Centrale thermique selon l'une des revendications 7 à 10, dans laquelle le fluide est un gaz, par exemple de l'air et le système utilisant le gaz échauffé est une turbine à gaz.

## Patentansprüche

1. Solarempfänger (R1, R2, R3) für eine Thermiezentrale, die eine Mehrzahl von Absorbermodulen (M, M', M1, M2) umfasst, wobei jedes Absorbermodul (M, M', M1, M2) wenigstens eine Fläche (6) umfasst, die dazu ausgelegt ist, von einem solaren Fluss beschienen zu werden, wobei die Module (M, M', M1, M2) nebeneinander angeordnet sind und ein Pflaster bilden, wobei jedes Absorbermodul (M, M', M1, M2) ferner seinen eigenen Fluidkreislauf (4) umfasst, in dem ein Fluid zirkulieren soll, das dazu ausgelegt ist, durch den solaren Fluss erhitzt zu werden, wobei die Fluidkreisläufe der Absorbermodule (M, M', M1, M2) miteinander verbunden sind, wobei das Fluidnetz jedes Absorbermoduls Röhren umfasst, die im Wesentlichen parallel zur Fläche (6) sind, die jeweils einen Eingang zur Versorgung mit dem und einen Ausgang zur Abführung des Fluids umfassen, und wobei die Fluidkreisläufe der Absorbermodule miteinander derart verbunden sind, dass das Fluid wenigstens zwischen einem ersten Absorbermodul und einem zweiten Absorbermodul zirkuliert, **dadurch gekennzeichnet, dass** ein ausreichendes Spiel (j) zwischen den benachbarten Absorbermodulen (M, M', M1, M2) derart vorgesehen ist, dass ein Kontakt zwischen den Absorbermodulen (M, M', M1, M2) im Fall der Ausdehnung verhindert wird, und dass der Eingang und der Ausgang in eine Fläche (7) des Absorbermoduls münden, die der Fläche (6) entgegengesetzt ist, die dazu ausgelegt ist, beschienen zu werden, derart, dass sie keinen Sonnenstrahlen ausgesetzt sind.

2. Solarempfänger nach Anspruch 1, wobei die Absorbermodule (M, M', M1, M2) derart orientiert sind, dass konzentrische Zonen ausgehend von einer zentralen Zone des Empfängers begrenzt sind.

3. Solarempfänger nach Anspruch 1 oder 2, wobei die Röhren (10) in eine Matrix (12) mit einem thermischen Leitfähigkeitskoeffizienten von mehr als 100 W/m/K eingebettet sind.

4. Solarempfänger nach einem der Ansprüche 1 bis 3, umfassend Versorgungsverbinder (11) und Abführungsverbinder (13), die mit den Eingängen und den Ausgängen der Absorbermodule (M, M', M1, M2) verbunden sind, wobei wenigstens die Versorgungsverbinder (11) Ausdehnungsbögen sind.

5. Solarempfänger nach einem der Ansprüche 1 bis 4, wobei die Absorbermodule (M, M', M1, M2) in Reihe wenigstens als Zweiergruppen verbunden sind, wobei die Gruppen parallel verbunden sind.

6. Solarempfänger nach einem der Ansprüche 1 bis 4, wobei die Absorbermodule (M1, M2) wenigstens in eine erste und in eine zweite Gruppe aufgeteilt sind, wobei die erste Gruppe eine zentrale Zone des Empfängers bildet und die zweite Gruppe die erste Gruppe umgibt und eine Umfangszone des Empfängers bildet, wobei die Absorbermodule jeder Gruppe parallel verbunden sind, und die zwei Gruppe in Reihe verbunden sind.

7. Thermiezentrale, umfassend wenigstens einen Empfänger (R1, R2, R3) nach einem der Ansprüche 1 bis 6, eine Fluidversorgung sowie Mittel zum Sammeln des erhitzten Fluids.

8. Thermiezentrale nach Anspruch 7 in Kombination mit Anspruch 6, wobei die erste Gruppe am Eingang mit einer Kaltfluidversorgung verbunden ist, und die zweite Gruppe am Ausgang mit einem System verbunden ist, das das Fluid verwendet, welches durch den Empfänger (R1, R2, R3) erhitzt ist.

9. Thermiezentrale nach Anspruch 7 in Kombination mit Anspruch 6, wobei die zweite Gruppe am Eingang mit einer Kaltfluidversorgung verbunden ist, und die erste Gruppe am Ausgang mit einem System verbunden ist, das das Fluid verwendet, welches durch den Empfänger (R1, R2, R3) erhitzt ist.

10. Thermiezentrale nach einem der Ansprüche 7 bis 9, umfassend einen Turm (22), auf dem der Empfänger (R1, R2, R3) montiert ist, sowie wenigstens einen Heliostat (24), der zum Empfänger (R1, R2, R3) hin orientiert ist.

11. Thermiezentrale nach einem der Ansprüche 7 bis 10, wobei das Fluid ein Gas ist, beispielsweise Luft, und das System, das das erhitzte Gas verwendet, eine Gasturbine ist.

## Claims

1. Solar receiver for a thermal power plant (R1, R2, R3) comprising a plurality of absorber modules (M, M', M1, M2), each absorber module (M, M', M1, M2) comprising at least one face (6) intended to be illuminated by a solar flux, wherein the modules (M, M', M1, M2) are arranged side by side forming a paving, each absorber module (M, M', M1, M2) further comprising its own fluid circuit (4) wherein a fluid to be heated by the solar flux is intended to flxo, the fluid circuits of the absorber modules (M, M', M1, M2) being connected to one another, wherein the fluid network of each absorber module comprises tubes substantially parallel to the face (6), each comprising a fluid supply inlet and discharge outlet, and wherein the fluid circuits of the absorber modules being connected to each other such that the fluid flows at least between a first absorber module and a second absorber module, **characterized in that** a sufficient gap (j) is provided between the adjacent absorber modules (M, M', M1, M2) so as to prevent contact between absorber modules (M, M', M1, M2) in the event of expansion, and **in that** said inlet and outlet open into a face (7) of the absorber module opposite the face (6) to be illuminated, such that they are not subject to the solar flux.

2. Solar receiver according to claim 1, wherein the absorber modules (M, M', M1, M2) are oriented so as to define concentric areas from a central area of the receiver.

3. Solar receiver according to claim 1 or 2, wherein the tubes (10) are embedded in a matrix (12) having a heat conductivity coefficient greater than 100 W/m/K.

4. Solar receiver according to any of claims 1 to 3, comprising supply connectors (11) and discharge connectors (13) connected to the absorber module (M, M', M1, M2) inlets and outlets, at least the supply connectors (11) being expansion loops.

5. Solar receiver according to any of claims 1 to 4, wherein the absorber modules (M, M', M1, M2) are connected in series at least in groups of two, the groups being connected in parallel.

6. Solar receiver according to any of claims 1 to 4, wherein the absorber modules (M1, M2) are distributed at least into a first and a second group, the first group forming a central area of the receiver and the second group encompassing the first group and forming a peripheral area of the receiver, the absorber modules of each group being connected in parallel and the two groups being connected in series.

7. Thermal power plant comprising at least one receiver (R1, R2, R3) according to any of claims 1 to 6, a fluid supply and means for collecting the heated fluid.

8. Thermal power plant according to claim 7 in conjunction with claim 6, wherein the first group is connected at the inlet to a cold fluid supply and the second group is connected at the outlet to a system using the fluid heated by the receiver (R1, R2, R3).

9. Thermal power plant according to claim 7 in conjunction with claim 6, wherein the second group is connected at the inlet to a cold fluid supply and the first group is connected at the outlet to a system using the fluid heated by the receiver (R1, R2, R3).

10. Thermal power plant according to any of claims 7 to 9, comprising a tower (22) whereon the receiver (R1, R2, R3) is mounted and at least one heliostat (24) facing the receiver (R1, R2, R3).

11. Thermal power plant according to any of claims 7 to 10, wherein the fluid is a gas, for example air, and the system using the heated gas is a gas turbine.
